# EUROPEAN PATENT SPECIFICATION

(11) **EP 3 842 467 B1**
(45) Date of publication and mention of the grant of the patent: **14.10.2026**
(21) Application number: 19852701.2
(22) Date of filing: 07.08.2019
(51) Int. Cl.: C08G 59/32, C08G 59/38, C08G 59/40, C08G 59/42, C08G 63/58, C09D 163/00, C09D 167/06, C09D 11/03, C09D 11/104

(54) **ESTER RESIN AND METHOD FOR PRODUCING ESTER RESIN**
ESTERHARZ UND VERFAHREN ZUR HERSTELLUNG VON ESTERHARZ
RÉSINE D'ESTER ET PROCÉDÉ DE PRODUCTION DE RÉSINE D'ESTER

(30) Priority: 24.08.2018 JP 2018157102
(43) Date of publication of application: 30.06.2021
(73) Proprietor: Harima Chemicals, Inc., Kakogawa-shi, Hyogo 675-0019 (JP)
(72) Inventor: MORITA Akihiro, Soka-shi, Saitama 340-0003 (JP); HISADA Hiroyuki, Soka-shi, Saitama 340-0003 (JP)
(74) Representative: Rau, Schneck & Hübner Patentanwälte Rechtsanwälte PartGmbB
(86) International application number: PCT/JP2019/031044
(87) International publication number: WO 2020/039923

(56) References cited:
- JP-A- 2003 321 636
- JP-A- 2005 075 862
- JP-A- 2007 248 704
- JP-A- 2007 248 704
- JP-A- 2008 274 150
- JP-A- 2013 064 059
- JP-A- 2013 087 172
- JP-A- 2017 503 658
- JP-A- H09 111 169
- JP-B2- 3 671 356

## Description

### Technical Field

The present invention is related to an ester resin and a method for producing an ester resin.

### Background Art

Printing inks usually contain an ink resin to disperse the pigments homogeneously and to adhere the pigments to a medium such as paper. It is known that the presence of a rosin structure in the ink resin improves pigment dispersiblity and glossiness (see, for example, JP 2003 321636 A).

JP 2007 248704 A discloses a resin composition for non-magnetic one component electrostatic charge developing toner, wherein the resin composition contains a polyester resin, which is a polycondensation reaction product obtained by condense-polymerizing a reaction product of a rosin and a polyhydric epoxy compound, a polyhydric alcohol, and a polybasic acid.

JP 3 671356 B2 discloses a binder for ink printing comprising a polyurethane composed mainly of a polymer polyol, a polyisocyanate compound and a chain extender, wherein the polymer polyol contains a rosin-modified polymer polyol.

### Summary OF INVENTION

### Technical Problem

However, printing inks containing ink resins containing rosin structure have the problem of inferior wear resistance compared to conventional printing inks containing epoxy acrylate as ink resin.

The present invention has been proposed in view of the above point, as an aim to provide an ink ester resin that, in one aspect, stands for pigment dispersibility, glossiness and wear resistance.

### [Solution to Problem]

The ester resin according to one form of the present invention is a reactant of a reaction product obtained by reacting a reactant between a rosin and an epoxy compound having three or more branched structures and having an epoxy group in each of said branched structures, with a polyvalent carboxylic acid, a polyfunctional epoxy compound, and an unsaturated carboxylic acid.

### Advantageous Effects of Invention

According to an embodiment of the present invention, one aspect can provide an ester resin for inks that juxtaposes pigment dispersibility, glossiness and abrasion resistance.

### Description of Embodiments

### Ester resin

The ester resin in one embodiment of the present invention will be described below. The ester resin in this embodiment is a reactant of a reaction product obtained by reacting a reactant between a rosin and an epoxy compound having three or more branched structures and having an epoxy group in each of said branched structures, with a polyvalent carboxylic acid, a polyfunctional epoxy compound, and an unsaturated carboxylic acid. Each of the components will be described below.

### Rosin

The rosin that can be used in this embodiment is not particularly limited, but may be, for example, a rosin obtained by subjecting natural rosin to various known hydrogenation, heat treatment and/or refining treatments. Specifically, natural rosin, hydrogenated rosin, disproportionate rosin, polymerized rosin, and purified rosin are listed, and one type of these may be used alone, or two or more types may be used in combination. The Diels-Alder reaction products of the above rosin with α,β-unsaturated carboxylic acids (such as maleinized rosin, maleinized rosin hydride, acrylated rosin, acrylated rosin hydride, etc.) may also be used. The above natural rosin includes, for example, tall oil rosin, gum rosin, wood rosin, etc. One type of rosin may be used alone, or two or more types may be used in combination.

### Epoxy compound having three or more branched structures and an epoxy group in each of said branched structures

Epoxy compounds that can be used in this embodiment use epoxy compounds having three or more branched structures from the main chain and having an epoxy group in each of said branched structures, to obtain an ink that juxtaposes pigment dispersibility, glossiness and wear resistance. The use of epoxy compounds (henceforth referred to as epoxy compounds) makes the network stronger and improves wear resistance as the resulting ink containing ink ester resin can be assembled with three-dimensional cross-linking as it cures.

Specific examples of epoxy compounds include glycidylether-type epoxy resin etc. Specifically, trimethylol propane polyglycidyl ether, glycerin polyglycidyl ether, diglycerin polyglycidyl ether, polyglycerin polyglycidyl ether, sorbitol-based Polyglycidyl ether and others are examples. They may be used alone or in combination with two or more types.

### Polyvalent carboxylic acid

The polyvalent carboxylic acids that can be used in this embodiment are not particularly limited, but include, for example, terephthalic acid, isophthalic acid, phthalic anhydride, trimellitic anhydride, pyromellitic anhydride, 2,6-naphthalene dicarboxylic acid, 5- Saturated polybasic acids such as sodium sulfoisophthalic acid, succinic acid, adipic acid, azelaic acid, sebacic acid, dodecanedionic acid, 1,4-cyclohexanedic acid, and hexahydro phthalic anhydride; maleic anhydride, fumaric acid, itaconic acid, and tetrahydro phthalic anhydride. etc.; dodecenyl succinic anhydride, tetrahydro phthalic anhydride, etc. Among these, the use of a polyvalent carboxylic acid containing a carbocyclic ring is preferable because the glass transition temperature and softening temperature of the resulting ester resin is raised and the scratch hardness (pencil hardness) and wear resistance of the ink coating film containing the ester resin are increased. Herein, the carbocyclic ring refers to a cyclic portion composed solely of carbon. One type of the above polyvalent carboxylic acid may be used alone, or two or more types may be used in combination.

Among the above polyvalent carboxylic acids, maleic anhydride with a structure that does not contain a carbocyclic ring (the cyclic portion does not consist solely of carbon) and tetrahydro phthalic anhydride with a structure that does contain a carbocyclic ring will be described as examples. Maleic anhydride is less structurally stable than tetrahydro phthalic anhydride and is therefore more reactive to UV light. Therefore, when the ink is adjusted using maleic anhydride as a polyvalent carboxylic acid and irradiated with ultraviolet light to be an ink coating, it may exhibit scratch hardness (pencil hardness) and wear resistance equivalent to tetrahydro phthalic anhydride with a carbocyclic ring-containing structure.

### Polyfunctional epoxy compounds

The multifunctional epoxy compounds that can be used in this embodiment are not particularly limited if they have two or more epoxy groups in one molecule, specifically, the glycidylether-type epoxy resins such as bisphenol A diglycidyl ether, bisphenol A-type β-methyl diglycidyl ether, bisphenol F diglycidyl ether, tetra Hydroxyphenylmethane tetraglycidyl ether, resorcinol diglycidyl ether, brominated bisphenol A diglycidyl ether, chlorinated bisphenol A diglycidyl ether, novolac glycidyl ether, polyalkylene glycol diglycidyl ether, hydrogenated bisphenol A glycidyl ether, diglycidyl ether of bisphenol A alkylene oxide adducts, glycerin triglycidyl ether, pentaerythritol diglycidyl ether; glycidyl ether/ester type epoxies, such as p-oxybenzoic acid glycidyl ether/esters; glycidyl ester type epoxies, such as diglycidyl phthalate, diglycidyl tetrahydrofthalate, diglycidyl hexahydrofthalate, diglycidyl ester of dimmer acid; glycidylamine-type epoxy resins such as glycidylaniline, tetraglycidyl diaminophenylmethane, and triglycidyl isocyanurate; linear aliphatic epoxy resins such as epoxidized polybutadiene and epoxidized soybean oil; 3,4-epoxy 6-methylcyclohexylmethyl 3,4 epoxy-6-methylcyclohexane carboxylate, 3,4 epoxycyclohexylmethyl (3,4-epoxycyclohexane) carboxylate, and other alicyclic Epoxy resins and others are mentioned. Among these, the use of a bifunctional epoxy compound is preferable because it reduces steric hindrance and prevents unreacted epoxy groups from remaining. One type of the above multifunctional epoxy compound may be used alone, or two or more types may be used in combination.

### Unsaturated Carboxylic Acid

The unsaturated carboxylic acids that can be used in this embodiment are not particularly limited, e.g., chain α,β-unsaturated monocarboxylic acids with 3 to 5 carbon atoms andor their anhydrides, chain α,β-unsaturated dicarboxylic acids with 3 to 5 carbon atoms andor Its anhydrides, aromatic α,β-unsaturated carboxylic acids, etc. Specific examples of unsaturated carboxylic acids include acrylic acid, methacrylic acid, methacrylic acid, maleic acid, maleic anhydride, fumaric acid, itaconic acid, itaconic anhydride, crotonic acid, and cinnamic acid. These may be used alone or in combination with two or more types.

### Ester resin production method

In producing an ester resin according to the present embodiment, at first, a ring-opening addition reaction by ring-opening of an epoxy group is advanced by reacting a rosin and an epoxy compound having three or more branching structures and having an epoxy group in each of said branching structures, as a first reaction process. Thereafter, as a second reaction process, the reaction product obtained in the first reaction process is reacted with the polyvalent carboxylic acid to progress the ring-opening addition reaction by condensation of the hydroxyl group generated by the ring-opening of the epoxy group and the carboxyl group of the polyvalent carboxylic acid. In addition, as a third reaction process, the ring-opening addition reaction by ring-opening of the epoxy group of the epoxy compound is advanced by reacting the reactants obtained in the second reaction process with a polyfunctional epoxy compound and an unsaturated carboxylic acid.

In the first reaction process, the temperature at which the rosin and the epoxy compound are reacted with the epoxy compound is usually in the range of 50°C to 200°C. Known catalysts, ring-opening reaction promoters, ring-opening reaction promoters, stabilizers, and the like that promote the ring-opening reaction of epoxy groups and carboxyl groups may be used in the first reaction process.

The amount of rosin and epoxy compounds used in the first reaction process is preferable to have a molar ratio of the carboxyl group of the rosin to the epoxy group (COOH/epoxy group) within the range of 0.3 to 1.5 in order to equalize the pigment dispersibility, glossiness and wear resistance of the resulting ink.

In the second reaction process, the temperature at which the reactants obtained in the first reaction process are reacted with the polyvalent carboxylic acid is usually in the range of 50°C to 200°C. In the second reaction process, known catalysts, ring-opening reaction promoters, stabilizers, and the like which promote the ring-opening addition reaction between the hydroxyl group produced by the ring-opening of the epoxy group and the carboxyl group of the polyvalent carboxylic acid may be used in the second reaction process.

The amount of the polyvalent carboxylic acid used in the second reaction process is preferable to have a molar ratio of the hydroxyl group derived from the epoxy group to the carboxyl group of the polyvalent carboxylic acid (OH/COOH) within the range of 0.5 to 2.0 to parallelize the pigment dispersibility, glossiness and wear resistance of the resulting ink.

In the third reaction process, the temperature at which the reactants obtained in the second reaction process are reacted with the polyfunctional epoxy compound and the unsaturated carboxylic acid is usually in the range of 50°C to 200°C. In the third reaction process, known catalysts, ring-opening reaction promoters, ring-opening reaction promoters, stabilizers, and the like, which promote the ring-opening reaction of epoxy groups and carboxyl groups, may be used in the third reaction process.

In the third reaction process, with regard to the amount of the reactants obtained in the second reaction process, the multifunctional epoxy compound, and the unsaturated carboxyl acid, the molar ratio of carboxylic groups derived from the reactants by the second reaction process and the unsaturated carboxyl acid to the epoxy group from the multifunctional epoxy compound is within the range of 0.5 to 20 to equalize the pigment dispersibility, glossiness and wear resistance of the resulting ink.

### Ink manufacturing method

The above ester resin for ink has three or more branched structures and uses as its raw material an epoxy compound having an epoxy group in each of said branched structures, and has unsaturated bonds derived from unsaturated carboxylic acids. Therefore, by manufacturing the ink using the above ester resin for ink, a pigment, and a photoinitiator, the resulting ink is an ink with excellent wear resistance.

The pigments are not particularly limited, but include inorganic and organic pigments. The inorganic pigments include, for example, yellow lead, zinc yellow, navy blue, barium sulfate, cadmium red, titanium dioxide, zinc oxide, alumina white, calcium carbonate, dark blue, carbon black, graphite, aluminum powder, and bengara. One type of these may be used alone or in combination with two or more types. Organic pigments include, for example, soluble azo pigments such as β-naphthol, β-oxynaphthoic acid, β-oxynaphthoic acid anilide pigments, acetoacetate anilide pigments, and pyrazolone pigments, β -naphthol pigments, beta-oxynaphthoic anilide pigments, acetoacetic anilide monoazo pigments, acetoacetic anilide disazo pigments, insoluble azo pigments such as pyrazolone pigments, copper phthalocyanine blue, halogenated (chlorine or bromine) Phthalocyanine pigments such as (2-)copper phthalocyanine blue, sulfonated copper phthalocyanine blue, metal-free phthalocyanine, quinacridone pigments, dioxadine pigments, sulen pigments (pyranthrone, anthanthrone, indanthrone, anthrapyrimidine, flavantron, and (e.g., thioindigo, anthraquinone, perinone, perylene pigments, etc.), polycyclic and heterocyclic pigments such as isoindolinone pigments, metal complexes, quinophthalone-based pigments, etc. One type of these may be used alone or in combination with two or more types.

Photopolymerization initiators are not limited, but, for example, 2,2-dimethoxy-1,2-diphenylethane-1-one, 1- hydroxycyclohexylphenyl ketone, 1-cyclohexylphenyl ketone, 2-hydroxy-2-methyl-1-phenyl 1-propan-1-one, 1-[4-(2-hydroxyethoxy)-phenyl] -2-Hydroxy-2-methyl-1-propan-1-one, 2 -methyl-1-(4-methylthiophenyl)-2-morpholinopropane -1 -2-benzyl-2-dimethylamino-1-(4-morpholinophenyl) ) -butanone-1, bis(2,4,6-trimethylbenzoyl)-phenyl phosphine oxide, 2,4,6-trimethylbenzoyl -diphenyl-phosphine oxide, 4-methylbenzophenone, benzophenone, 2-hydroxy-1-{4 4-[4-(2-hydroxy-2-methylpropionyl)-benzyl]phenyl}-2 -methylpropane-1-one, for example. They may be used alone or in combination with two or more types.

The ink of this embodiment may further comprise an active energy ray curable monomer and known additives if necessary. The active energy beam curable monomer is a monomer having a photopolymerizable group that can be copolymerized with the above ester resin for ink by irradiation of an active energy beam. The additives include, for example, a curing accelerator (such as cobalt naphthenate), a filler, a thickener, a foaming agent, an antioxidant, a light stabilizer, a heat-resistant stabilizer, and a flame retardant.

### Example

Next, based on the examples and comparative examples, the invention will be described in more detail, but the invention is not limited by the following examples. For example, when synthesizing the ink ester resin of the present embodiment, the reaction can also be carried out in a monomer. Below, parts and % are on a mass basis, unless otherwise noted.

### Example 1

The first reaction process was completed by dissolving 34.3 parts of disproportionate rosin (Harima Chemicals Co., Ltd., product name G-100F) as rosin in a four-mouth flask equipped with a stirrer, a reflux condenser with a water separator, and a thermometer while blowing nitrogen gas into the flask, and mixing it with 14.3 parts of trimethylpropane polyglycidyl ether as an epoxy compound with epoxy groups to each of said branched structures with three or more branched structures and with 0.3 parts of trimethylamine, and reacting at 160°C (acid number below 7 mg KOH/g).

The second reaction process was completed by mixing the reaction product obtained in the first reaction process with 9.6 parts of maleic anhydride as a polyvalent carboxylic acid and reacting at 160°C (acid value below 110 mg KOH/g).

The third reaction process is completed by mixing the reaction product obtained in the second reaction process with 6.9 parts of acrylic acid, 34.5 parts of bisphenol A epoxy resin (manufactured by Mitsui Chemical Co., Ltd. , product name Epomic R140), and 0.1 parts of hydroquinone, and reacting at 160°C, and the ink esters according to this embodiment Resin (hereinafter Resin 1) was obtained (acid value 16.0 mg KOHg).

The composition for ink according to this embodiment was obtained by mixing 60.0 parts of the resulting resin 1, 39.9 parts of trimethylol propane triacrylate (TMPTA) and 0.1 parts of hydroquinone and heating them at about 110°C (hereinafter referred to as varnish 1).

43.0 parts of the resulting varnish 1, 20.0 parts of neutral carbon black (pigment, Mitsubishi Chemical Corporation; product name RCF #52), 20.0 parts of dipentaerythritol hexaacrylate (DPHA), 12.0 parts of trimethylol propane triacrylate (TMPTA), and 5.0 parts of 2-methyl-1-[4-(methylthio)phenyl]-2-morpholinopropane-1-on (photoinitiator, BASF SE, product name Irgacure 907) were blended, and dispersed in a three-roll mill (Inoue Manufacturing Co., Ltd., S-4 3/4 x 11) so that the maximum particle diameter was 5.0 µm or less. The ink of this embodiment (hereinafter referred to as Ink 1) was thus obtained.

The ratio of each ingredient in the ink was adjusted with an Incometer (Toyo Seiki Co., Ltd. product name D-2) to achieve a tack value of 8.0-10.0 after one minute under the condition at a roll temperature of 30°C and of 400 rpm.

### Example 2-7

Resins 2 to 7 were obtained by the same method as in Example 1 above, except that each of the ingredients was changed to the proportions shown in Table 1. Varnishes 2 to 7 and inks 2 to 7 were also obtained using the obtained resins 2 to 7 by the same method as in Example 1 (see Tables 2 and 3). In Table 1, a trifunctional or higher epoxy resin in the first reaction process refers to an epoxy compound having three or more branched structures and an epoxy group in each of the aforementioned branched structures. The main component of the glycerin-type epoxy resin is 1,2,3-propane polyglycidyl ether or glycerol polyglycidyl ether. Furthermore, bisphenol A type epoxy resin refers to a prepolymer obtained by polymerization of bisphenol A and epichlorohydrin. Neopentyl glycol type epoxy resin refers to neopentyl glycol diglycidyl ether.

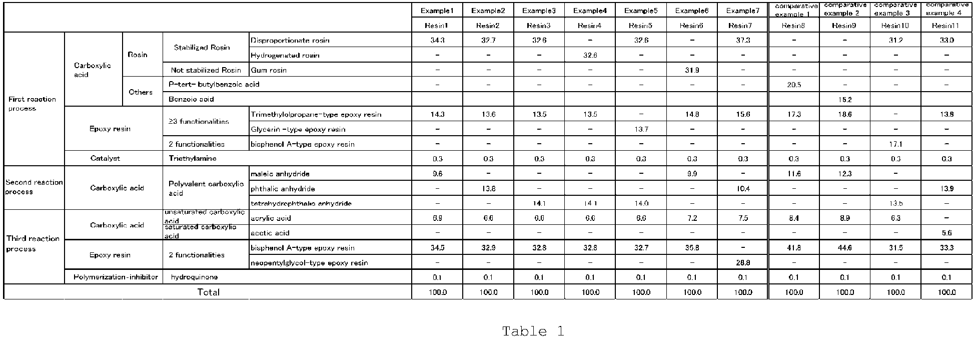

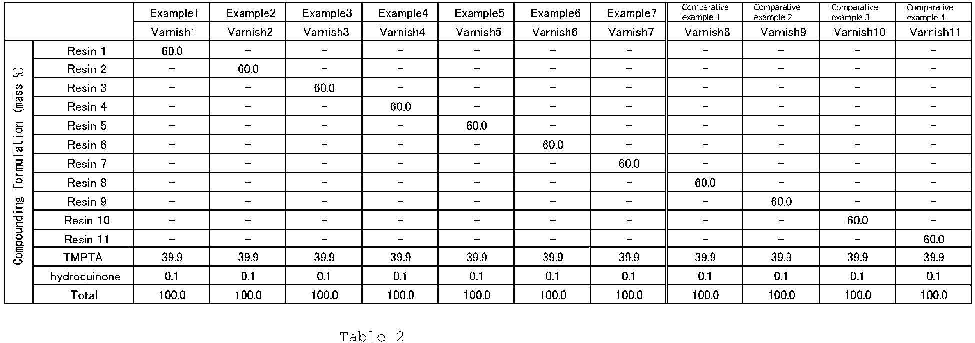

### Comparison examples 1-4

Resins 8 to 11 were obtained by the same method as in Example 1 above, except that each of the ingredients was changed to the proportions shown in Table 1. Varnishes 8 to 11 and inks 8 to 11 were obtained using the obtained resins 8 to 11 by the same method as in Example 1.

### Ink Assesment

The inks obtained in each example and each comparison example were evaluated by the following method.

### Curability

0.4 mL of each ink was applied to art paper with a full surface roll of RI tester. The UV light was then irradiated with one pass of UV light using an ultraviolet light irradiation device (iGraphics Inc. brand name ESC-4011GX) with a metal halide lamp at 80 W/cm and conveyor speed of 24 m/min.

The resulting ink coating was judged to be texture-drying by the following criteria
○: No stickiness at all in the finger touch. Good level.
△: Low slightly sticky to the finger touch. Level of practicality.
×: Feels sticky to the finger touch. Level of impracticality.

### (Gloss value)

The ink was irradiated with ultraviolet light under the same conditions as for the evaluation of the curability above, and the gloss value of the printed material after curing was measured with a 60°-60° glossmeter (manufactured by Taiyukizai Co., LTD., brand name Microtrigloss).

The resulting ink coating was judged to have a high gloss value if it had a gloss value of 60 or higher in the above test.

### Pencil Hardness

The ink was irradiated with ultraviolet light under the same conditions as for the above curability evaluation, and the printout was evaluated for maximum hardness where the printout film does not deviate using a method compliant with JIS K5600 (2007).

The resulting ink film can be judged as a usable level at F or better.

### (Hard) 2H H F HB B 2B (soft)

### Wear Resistance

The ink is irradiated with ultraviolet light under the same conditions as for the evaluation of curability above, and the printout after curing is run back and forth 40 times with an S-type friction tester (made by YASUDA SEIKI SEISAKUSHO,LTD.) with a weight of 1816g, using a method conforming to JIS K5701-1 (2000). The degree of wear and tear of the ink film on the printed surface was evaluated in five steps.

The resulting ink coating can be judged as a usable level by 4 or more of the following criteria.
5: The scuffing by 40 times back and forth was less than 20%.
4: The scuffing by 40 times back and forth was more than 20% and less than 40%.
3: The scuffing by 40 times back and forth was more than 40% and less than 60%.
2: The scuffing by 40 times back and forth was more than 60% and less than 80%.
1: The scuffing by 40 times back and forth was more than 80%.

### Fluidity

The fluidity was evaluated by taking one pipette of ink obtained in each example and each comparison example into an ink cup (1 pipette = about 1.5 mL), placing it on a glass plate tilted at 60° and leaving it for 10 minutes.

As for the distance the ink flowed, if it was 80 mm or more, the ink was considered to have high fluidity.
○: more than 80 mm.
△: 40-80mm
×: 40mm or less

The results of the ink evaluation are shown in Table 3.

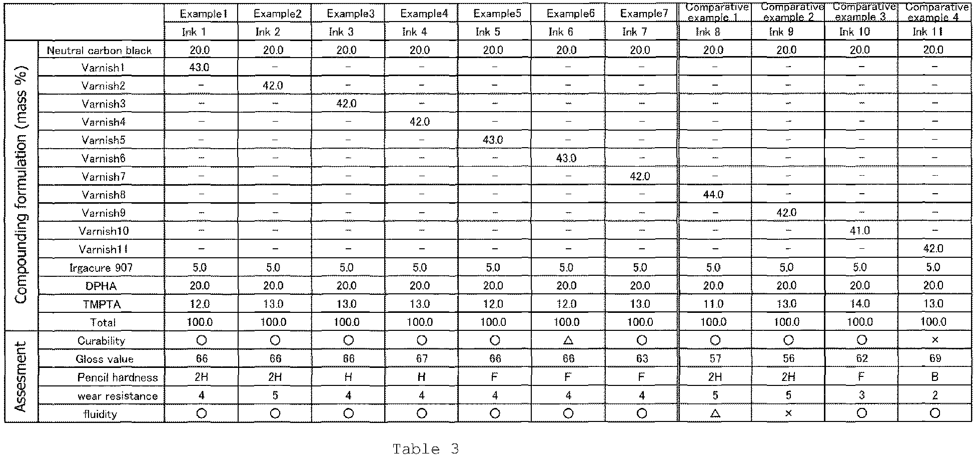

As shown in Table 3, the ink obtained in the examples is is a reactant of a reactant between a rosin and an epoxy compound having three or more branched structures and having an epoxy group in each of said branched structures, a polyvalent carboxylic acid, a polyfunctional epoxy compound and an unsaturated carboxylic acid. Therefore, we can see that it retains usable levels of curability, gloss value, pencil hardness, wear resistance and fluidity for all properties.

## Claims

1. An ester resin which is a reactant of:
a reaction product obtained by reacting a reactant between a rosin and an epoxy compound (A) having three or more branched structures and having an epoxy group in each of said branched structures, with a polyvalent carboxylic acid;
a polyfunctional epoxy compound (B); and
an unsaturated carboxylic acid.

2. The ester resin according to claim 1, wherein the polyvalent carboxylic acid is a polyvalent carboxylic acid selected from the group consisting of maleic anhydride, phthalic anhydride and tetrahydro phthalic anhydride.

3. The ester resin according to claim 1, wherein the unsaturated carboxylic acid is an acrylic acid.

4. The ester resin according to claim 1, wherein the epoxy compound (A) is a glycidylether-type epoxy resin.

5. The ester resin according to claim 4, wherein the glycidylether-type epoxy resin is trimethylolpropane polyglycidyl ether.

6. The ester resin according to any one of claim 1 to 5, wherein the multifunctional epoxy compound (B) is a bifunctional epoxy compound.

7. A process for preparing ester resin comprising:
a first reaction process of reacting a rosin and an epoxy compound having three or more branched structures and having an epoxy group in each of the branched structures;
a second reaction process of reacting the reaction product obtained in the first reaction process and a polyvalent carboxylic acid; and
a third reaction process of reacting the reaction product obtained in the second reaction process, a multifunctional epoxy compound and an unsaturated carboxylic acid.

## Patentansprüche

1. Esterharz, das ein Reaktant ist von:
einem Reaktionsprodukt, das durch Reagierenlassen eines Reaktants zwischen einem Kolophonium und einer Epoxidverbindung (A), die drei oder mehr verzweigte Strukturen und eine Epoxidgruppe in jeder der verzweigten Strukturen aufweist, mit einer mehrwertigen Carbonsäure gewonnen wird;
einer polyfunktionalen Epoxidverbindung (B); und
einer ungesättigten Carbonsäure.

2. Esterharz nach Anspruch 1, wobei die mehrwertige Carbonsäure eine mehrwertige Carbonsäure ist, die ausgewählt ist aus der Gruppe bestehend aus Maleinsäureanhydrid, Phthalsäureanhydrid und Tetrahydrophthalsäureanhydrid.

3. Esterharz nach Anspruch 1, wobei die ungesättigte Carbonsäure eine Acrylsäure ist.

4. Esterharz nach Anspruch 1, wobei die Epoxidverbindung (A) ein Glycidylether-Epoxidharz ist.

5. Esterharz nach Anspruch 4, wobei das Glycidylether-Epoxidharz Trimethylolpropan-Polyglycidylether ist.

6. Esterharz nach einem der Ansprüche 1 bis 5, wobei die mulifunktionale Epoxidverbindung (B) eine bifunktionelle Epoxidverbindung ist.

7. Verfahren zur Herstellung von Esterharz, umfassend:
einen ersten Reaktionsprozess zum Reagierenlassen von einem Kolophonium und einer Epoxidverbindung, die drei oder mehr verzweigte Strukturen und eine Epoxidgruppe in jeder der verzweigten Strukturen aufweist;
einen zweiten Reaktionsprozess zum Reagierenlassen des Reaktionsprodukts, das im ersten Reaktionsprozess erhalten wird, und einer mehrwertigen Carbonsäure; und
einen dritten Reaktionsprozess zum Reagierenlassen des Reaktionsprodukts, das im zweiten Reaktionsprozess erhalten wird, einer multifunktionalen Epoxidverbindung und einer ungesättigten Carbonsäure.

## Revendications

1. Résine d'ester qui est un réactif :
d'un produit de réaction obtenu par mise en réaction d'un réactif entre une colophane et un composé époxy (A) ayant trois structures ramifiées ou plus et ayant un groupe époxy dans chacune desdites structures ramifiées, avec un acide carboxylique polyvalent ;
d'un composé époxy polyfonctionnel (B) ; et
d'un acide carboxylique insaturé.

2. Résine d'ester selon la revendication 1, dans laquelle l'acide carboxylique polyvalent est un acide carboxylique polyvalent choisi dans le groupe constitué par l'anhydride maléique, l'anhydride phtalique, et l'anhydride tétrahydrophtalique.

3. Résine d'ester selon la revendication 1, dans laquelle l'acide carboxylique insaturé est un acide acrylique.

4. Résine d'ester selon la revendication 1, dans laquelle le composé époxy (A) est une résine époxy de type éther glycidylique.

5. Résine d'ester selon la revendication 4, dans laquelle la résine époxy de type éther glycidylique est un éther polyglycidylique de triméthylolpropane.

6. Résine d'ester selon l'une quelconque des revendications 1 à 5, dans laquelle le composé époxy multifonctionnel (B) est un composé époxy bifonctionnel.

7. Procédé de préparation d'une résine d'ester comprenant :
un premier processus de réaction consistant à mettre en réaction une colophane et un composé époxy ayant trois structures ramifiées ou plus et ayant un groupe époxy dans chacune des structures ramifiées ;
un deuxième processus de réaction consistant à mettre en réaction le produit de réaction obtenu dans le premier processus de réaction et un acide carboxylique polyvalent ; et
un troisième processus de réaction consistant à mettre en réaction le produit de réaction obtenu dans le deuxième processus de réaction, un composé époxy multifonctionnel et un acide carboxylique insaturé.
